Europäisches Patentamt

European Patent Office

Office européen des brevets

(19)

(11) Veröffentlichungsnummer: **0 238 775**
**A2**

(12) **EUROPÄISCHE PATENTANMELDUNG**

(21) Anmeldenummer: **86730208.5**

(22) Anmeldetag: **15.12.86**

(51) Int. Cl.⁴: **C21C 5/38** , F27D 17/00 , C21C 5/40 , F27B 1/22

(30) Priorität: **27.02.86 DE 3606681**

(43) Veröffentlichungstag der Anmeldung: **30.09.87 Patentblatt 87/40**

(84) Benannte Vertragsstaaten: **AT BE CH DE ES FR GB GR IT LI LU NL SE**

(71) Anmelder: **MANNESMANN Aktiengesellschaft Mannesmannufer 2 D-4000 Düsseldorf 1(DE)**

(72) Erfinder: **Brocks, Klaus Waldschänkenweg 5 D-3410 Northeim 1(DE)**
Erfinder: **Simon, Hans Gerry Matthias-Claudius-Strasse 6 D-4700 Hamm(DE)**
Erfinder: **Wedde, Eckart Gneisenaustrasse 61 D-4100 Duisburg 1(DE)**

(74) Vertreter: **Meissner, Peter E., Dipl.-Ing. et al Meissner & Meissner Patentanwälte Herbertstrasse 22 D-1000 Berlin 33 Grunewald(DE)**

(54) **Verfahren und Vorrichtung zur Rückgewinnung von Abwärmeenergie.**

(57) Die Erfindung betrifft ein Verfahren zur Rückgewinnung und anschließenden Nutzung von hochedler Abwärmeenergie, insbesondere intervallartig anfallender Abwärmeenergie, unter Verwendung mindestens eines Primärwärmeaustauschers, der von einem flüssigen Wärmeübertragungsmedium durchströmt wird und die Abwärme zur weiteren Nutzung in nachgeschaltete Prozesse mit Wärmebedarf leitet. Um zu einem Verfahren und einer Vorrichtung zu kommen, das/die eine wirtschaftliche Verwertung von hochedler Abwärme auf hohem Temperaturniveau ermöglicht, auch wenn die Abwärme diskontinuierlich anfällt, wird vorgeschlagen, daß die Abwärme, die von dem eine Siedetemperatur von mindestens 200 Grad C aufweisenden Wärmeübertragungsmedium des/der Primärwärmeaustauscher(s) aufgenommen wird, in einem mit stückigem, vom Wärmeübertragungsmedium umströmten Feststoff als Speichermedium befüllten Wärmespeicher auf hohem Temperaturniveau (über 200 Grad C) zwischengespeichert wird und in kontinuierlicher Weise aus diesem Wärmespeicher zur weiteren Nutzung abgezogen wird.

## Verfahren und Vorrichtung zur Rückgewinnung von Abwärmeenergie

Gegenstand der Erfindung ist ein Verfahren zur Rückgewinnung und Nutzung von hochedler Abwärmeenergie, insbesondere von intervallartig anfallender Abwärmeenergie. Derartige Abwärme wird beispielsweise beim Betrieb eines Kupolofens oder eines Konverters durch das Abgas, das Temperaturen über 600 Grad C aufweist, freigesetzt.

Wegen des hohen Temperaturniveaus handelt es sich hierbei um sehr wertvolle Energie. Ihre adäquate Nutzung war bisher aus mehreren Gründen kaum möglich. Es sind zwar Verfahren zur Wärmerückgewinnung bekannt, bei denen die Abwärme· in Form von erwärmtem Wasser oder erzeugtem Wasserdampf einer weiteren Nutzung zugeführt werden kann. Bei der Erzeugung von Warmwasser ist es jedoch nachteilig, daß die Wärme auf vergleichsweise niedrigem Temperaturniveau (praktisch bis maximal 150 Grad C) abgeführt wird und damit technisch schlecht verwertbar ist. Daher beschränkt sich die Nutzung der Energie in diesen Fällen in erster Linie auf den Sektor der Gebäudeheizung, deren Bedarf nicht nur starken Schwankungen unterliegt, sondern in den Sommermonaten sogar fast null ist, so daß die anfallende Abwärme zumindest zeitweilig nur zu einem geringen Teil genutzt werden kann. Hinzu kommt, daß das unvorhergesehene Entstehen von Wasserdampf im Wärmeaustauscher des Wärmerückgewinnungssystems Gefahren in sich birgt, weil z.B. die Wärmeleitfähigkeit von Wasserdampf wesentlich geringer ist als die von Wasser, so daß es zu einer unzureichenden Kühlung des Abgassystems kommen kann.

Erzeugt man dagegen, wie ebenfalls bekannt ist, unmittelbar in den Wärmeaustauschern, in denen die Abwärme aufgenommen wird, Wasserdampf, so steht die gewonnene Wärmeenergie zwar auf einem höheren und damit technisch besser verwertbaren Temperaturniveau zur Verfügung. Nachteilig hierbei ist jedoch, daß bei intervallartig anfallender Abwärme eine Speicherung der Wärmeenergie erfolgen muß, weil ihre Nutzung (z.B. zur Stromerzeugung) im Regelfall sinnvoll nur in kontinuierlicher Weise vorgenommen werden kann. Eine entsprechende Speicherung von Heißdampf ist aber allein schon aus Gründen des zu speichernden Volumens so aufwendig (Bau einer großen Druckkesselanlage mit guter Wärmeisolierung), daß die Wirtschaftlichkeit dieser Möglichkeit von vornherein nicht gegeben ist.

Weiterhin ist aus der DE-OS 28 13 133 eine Anlage zur Rückgewinnung der Abwärme eines Drehrohrofens bekannt, bei der ein Wärmepuffer mit Feststoffschüttung zum Zwecke der Schwerölvorwärmung für die Ofenbefeuerung benutzt wird. Die Be-und Entladung des Wärmepuffers erfolgt über ein und dasselbe Leitungssystem. Dieser Wärmepuffer dient lediglich zum kurzfristigen Ausgleich von Schwankungen des Wärmebedarfs bei der Ölvorwärmung und ist nicht dafür geeignet, größere Wärmemengen über einen längeren Zeitraum für eine kontinuierliche Nutzung von Abwärme, die in stark schwankenden Mengen oder auch intervallartig anfällt, zu speichern. Ansonsten sind über den Wärmepuffer und seinen Betrieb mit Ausnahme des Hinweises, daß die Vorlauftemperatur zwischen 150 und 200°C liegen soll, keine näheren Angaben gemacht.

Aufgabe der Erfindung ist es daher, ein Verfahren und eine Vorrichtung zu seiner Durchführung anzugeben, das eine wirtschaftliche Verwertung von. hochedler Abwärme auf hohem Temperaturniveau ermöglicht, auch wenn die Abwärme diskontinuierlich anfällt.

Gelöst wird diese Aufgabe durch ein Verfahren, das durch die Merkmale des Anspruchs 1 gekennzeichnet und im Unteranspruch 3 in vorteilhafter Weise ausgestaltet ist. Eine erfindungsgemäße Vorrichtung weist die Merkmale des Anspruchs 3 auf; vorteilhafte Weiterbildungen sind in den Unteransprüchen 4 - 14 dargestellt.

Grundgedanke der Erfindung ist es, eine Zwischenspeicherung der aus dem Abwärmestrom zurückgewonnenen Wärme auf hohem Temperaturniveau (über 200 Grad C) vorzunehmen und als Speichermedium einen Feststoff zu verwenden, der eine hohe Wärmespeicherkapazität aufweist.

Die Wärmeübertragung in den Wärmespeicher wird dabei mittels eines flüssigen Mediums mit entsprechend hohem Siedepunkt (über 250°C) und thermischer Beständigkeit vorgenommen. Auf diese Weise steht die zurückgewonnene Abwärmeenergie auf hohem Temperaturniveau für eine nachfolgende kontinuierliche Nutzung zur Verfügung, wobei der erforderliche anlagentechnische Aufwand gering gehalten werden kann, da der Einsatz von Feststoffen als Speichermedium, insbesondere von Gesteinen wie Dolomit, Baryt, Granit, Grauwacke oder Porphyr, nicht nur eine kompakte Bauweise ermöglicht. Der Behälter des Wärmespeichers kann außerdem für einen geringen Betriebsdruck ausgelegt und damit billig hergestellt werden, weil der Wärmespeicher in jedem Fall unterhalb der Siedetemperatur des Wärmeübertragungsmediums betrieben wird und lediglich ein geringer Überdruck zur Aufrechterhaltung des Flüssigkeitsumlaufs gewährleistet sein muß. Schließlich ist das Speichermaterial selbst ebenfalls preisgünstig.

Dolomit hat sich für den vorgesehenen Verwendungszweck als besonders geeignet erwiesen, da es nicht nur gute Wärmespeichereigenschaften aufweist, sondern auch eine ausgezeichnete Beständigkeit gegen Zerfall unter Belastung durch Temperatur und Flüssigkeitsströmung besitzt.

Zur Wärmeübertragung wird vorteilhafterweise Öl verwendet, insbesondere spezielles Wärmeübertragungsöl, das sich durch einen im Vergleich zu Wasser wesentlich höheren Siedepunkt auszeichnet, so daß die Gefahr des ungewollten Entstehens von Dampfblasen praktisch ausgeschlossen werden kann. Die Auswahl des zu verwendenden Öles muß auf den jeweiligen Einsatzfall, d.h. auf die im Wärmeübertragungsmedium möglicherweise entstehenden Höchsttemperaturen abgestimmt sein, da Öl bei bestimmten hohen Temperaturen nicht mehr stabil ist, sondern zu cracken beginnt. Aus wirtschaftlichen Gründen sollte der Wärmespeicher vorzugsweise nur bis zu Temperaturen von maximal etwa 400 Grad C betrieben werden, da sonst Wärmeübertragungsmedien verwendet werden müßten, die sehr teuer sind und die Wirtschaftlichkeit des Verfahrens in Frage stellen würden.

Nach der Erfindung ist vorgesehen, daß das Be-und Entladen des Wärmespeichers über unabhängig betreibbare Leitungssysteme vorgenommen wird. Während für das Beladen ein Primärkreislauf vorgesehen ist, kann das Entladen entweder ebenfalls in einem Kreislauf (Sekundärkreislauf) oder in Form eines offenen Systems erfolgen. Im Falle eines Primär-und Sekundärkreislaufs werden diese vorteilhaft so ausgeführt, daß sie im Wärmespeicher zueinander offen sind, so daß dort keine zusätzlichen Wärmeaustauscherflächen vorzusehen sind.

Das in den Wärmespeichern befindliche Öl wird durch ein Inertgas-Druckpolster gepuffert, um Reaktionen des erwärmten Öls mit z.B. Luftsauerstoff zu verhindern und Korrosion auszuschließen, die durch die Reaktionsprodukte hervorgerufen werden könnte. Das Gaspolster befindet sich z.B. im oberen Teil des Wärmespeichers und steht unter einem leichten Überdruck.

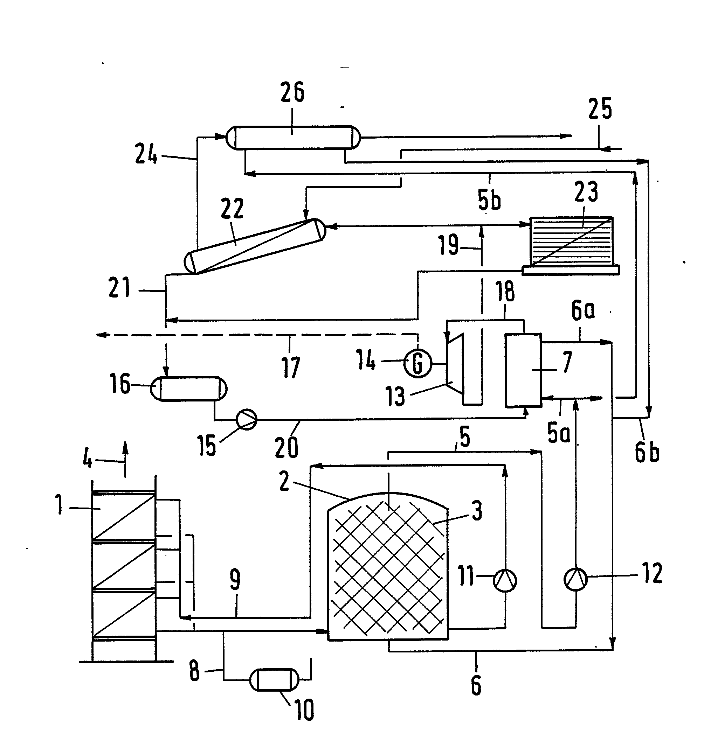

Im folgenden wird die Erfindung anhand des in der Figur als Beispiel dargestellten Anlagenschemas einer Abwärmerückgewinnungsanlage näher erläutert. Der durch einen Pfeil angedeutete Abgasstrom 4 einer nicht dargestellten Konverteranlage wird durch einen Primärwärmeaustauscher I geführt. Das Abgas 4 weist beim Eintritt in den Primärwärmeaustauscher I eine Temperatur von 600 bis 1600 Grad C auf. Mit Hilfe der Umwälzpumpe II wird durch die Leitung 9 Wärmeübertragungsöl in den Primärwärmeaustauscher I geführt und nach Erwärmung auf max. 400

Grad C über die Leitung 8 in den Wärmespeicher 2 zurückgegeben. Der Wärmespeicher 2 ist mit Gesteinschotter aus z.B. Dolomit gefüllt, dessen Korngröße etwa 6 cm beträgt. Das erhitzte Wärmeübertragungsöl durchströmt die Gesteinschotterfüllung 3 und gibt seine Wärme weitgehend an diese ab. Das abgekühlte Öl wird wiederum mit Hilfe der Umwälzpumpe II dem Primärwärmeaustauscher I zugeführt (Primärkreislauf). Der Wärmespeicher 2, der für einen Betriebsüberdruck von I - 2 bar ausgelegt ist, weist außen eine Wärmeisolierung auf. Zur Nutzung der gespeicherten Wärmeenergie ist der Wärmespeicher 2 an eine Leitung 5 zum Abziehen des warmen Wärmeübertragungsöls und an eine Leitung 6 zur Rückleitung des abgekühlten Wärmeübertragungs öls angeschlossen. Der Wärmetransport zum Ort der Wärmenutzung erfolgt also ebenfalls im Kreislauf (Sekundärkreislauf) und mit dem gleichen Wärmeübertragungsmedium wie im Primärkreislauf.

Die Umwälzung des Wärmeübertragungsöls im Sekundrkreislauf Wird durch die Umwälzpumpe I2 vorgenommen. Als hauptsächlicher Wärmeverbraucher ist in den Sekundärkreislauf ein Dampferzeuger 7 eingeschaltet, dessen Zu-und Ableitung für das Wärmeübertragungsöl mit 5a bzw. 6a bezeichnet sind. Je nach Bedarf ist dieser Dampferzeuger in I-oder 2-stufiger Bauweise ausgeführt, um den zum Antrieb der Dampfturbine erforderlichen Druck zu erzeugen. Eine Druck-, Mengen-und Temperaturregelung erfolgt durch nicht dargestellte Regeleinrichtungen. Aus einem Tank I6 wird mit Hilfe der Speisewasserpumpe I5 über die Leitung 20 Speisewasser in den Dampferzeuger 7 gegeben. Der erzeugte Frischdampf wird über die Leitung I8 auf eine Dampfturbine I3 geleitet und nach Entspannung durch die Leitung I9 abgeleitet. Die Turbine I3 ist mit einem Generator I4 zur Erzeugung elektrischen Stromes gekoppelt, der durch die Leitung I7 einem Verbrauchernetz zugeführt wird. Da der durch die Abdampfleitung I9 abgeleitete Wasserdampf noch eine beträchtliche Restwärme enthält, ist der mit der Abdampfleitung I9 gekoppelte, als Röhrenwärmeaustauscher ausgeführte Kondensator 22 auf seiner Sekundärseite mit dem Rücklauf 25 und dem Vorlauf 24 einer Gebäudeheizung verbunden. Das im Kondensator 22 anfallende Kondensat wird durch die Leitung 2I in den Speisewassertank I6 zurückgeleitet. Für Zeiten, in denen der Wärmebedarf für die Gebäudebeheizung gering ist, steht alternativ als Kondensator ein Rieselkühler 23 zur Verfügung. Weiterhin enthält das Anlagenschema eine Variante, die das Problem löst, daß in Zeiten besonders hohen Heizungswärmebedarfs, der durch den Kondensator 22 nicht gedeckt werden kann, ausreichend viel Heizungswärme zur Verfügung gestellt wird. Hierzu ist in den Heizungsvorlauf 24 ein zusätzlicher Wärmeaustauscher 26 eingeschaltet, der mit dem Wärmeübertragungsöl über die Leitung 5b, die an die Leitung 5 angeschlossen ist, beheizt werden kann.

Die Leitung 6b des Wärmeaustauschers 26 für die Ableitung des abgekühlten Wärmeübertragungsöls ist entsprechend mit der Rücklaufleitung 6 verbunden. Selbstverständlich ist es auch vorstellbar, daß der Wärmeaustauscher 26 nicht eine Gebäudeheizung betreibt, sondern zur Beheizung z.B. eines verfahrenstechnischen Prozesses benutzt wird (z.B. Trocknungsprozeß, Vorwärmung von Betriebsmedien usw.). Durch nicht dargestellte Regeleinrichtungen ist es möglich, die Wärmeversorgung der angeschlossenen Verbrauchsprozesse zu regeln.

Der Primärkreislauf ist durch eine geeignete Vorrichtung IO gegen Überdruck gesichert.

Der Wärmespeicher 2 kann in Weiterbildung der Erfindung auch in mehrere Einheiten aufgeteilt sein, wobei diese in Serie oder in Reihe geschaltet sein können. Bei einer Reihenschaltung, d.h. im parallelen Betrieb werden die Wärmespeicher 2 im gleichen Temperaturbereich gefahren. Die modulare Bauweise der Speichereinheiten läßt die Verwendung gleicher Speicheraggregate für Einsatzfälle mit unterschiedlich hohem Bedarf an Wärmespeicherkapazität zu, da lediglich die Zahl der Speichereinheiten anzupassen ist. Bei einer Serienschaltung bietet sich dagegen der Betrieb der Wärmespeicher 2 mit unterschiedlichen Temperaturen an. Dies kann besonders dann sinnvoll sein, wenn verschiedene technische Prozesse mit Wärmeenergie versorgt werden müssen, deren Temperaturniveau ebenfalls unterschiedlich ist. In diesen Fällen läßt sich eine bezüglich des Temperaturniveaus besonders günstige Nutzung der Abwärmeenergie realisieren.

Für die Festlegung der Körnung des Speichermediums sind verschiedene Gesichtspunkte maßgebend. Zum einen kommt es darauf an, eine ausreichend große Oberfläche zur Verfügung zu stellen, damit der Wärmeübergang zwischen dem Wärmeübertragungsmedium und dem Speichermedium in vernünftiger Zeit vor sich gehen kann. Zum anderen muß sichergestellt sein, daß das Wärmeübertragungsmedium das Speichermedium leicht durchströmen kann, damit der Betriebsdruck für die Aufrechterhaltung des Primär-und des Sekundärkreislaufs möglichst gering gehalten werden kann.

Wesentlich ist, daß das Speichermedium möglichst keine Feinanteile enthält, da diese einerseits zu einer Verschlammung des Wärmespeichers 2 führen können und andererseits innerhalb der Kreisläufe abrasive Wirkungen mit entsprechenden Schädigungen nach sich ziehen. Die Ausgangsleitungen 9 und 5 aus dem Wärmespeicher 2 sollten daher auf jeden Fall mit auswechselbaren Filtereinheiten ausgestattet sein.

Der Betrieb der Primärwärmeaustauscher zur Aufnahme der Abwärmeenergie kann im Gegenstrom oder im Gleichstrom erfolgen. Welches Prinzip zweckmäßiger ist, hängt vom jeweiligen Einsatzfall ab, d.h. insbesondere von der anstehenden Temperatur der Abwärmeenergie und von der zulässigen Höchsttemperatur des Wärmeübertragungsmediums.

Die erfindungsgemäße Lösung des Problems der Rückgewinnung von hochedler Abwärmeenergie hat den Vorteil, daß die eigentliche Rückgewinnung der Energie von der Weiterverwendung dieser Energie zeitlich entkoppelt ist.

Die Zwischenspeicherung der Wärme in einem Wärmespeicher auf Feststoffbasis ermöglicht eine verlustarme Wärmepufferung auf hohem Temperaturniveau über größere Zeiträume und damit eine gleichmäßige Einspeisung in Wärmeverbrauchsprozesse, so daß Intervalle, in denen keine Abwärme anfällt, leicht überbrückt werden können. Das Konzept der mehrstufigen Abwärmenutzung ermöglicht eine weitestgehende Verwertung der in der Abwärme enthaltenen Energie.

## Ansprüche

I. Verfahren zur Rückgewinnung und anschließenden Nutzung von hochedler Abwärmeenergie unter Verwendung mindestens eines Primärwärmeaustauschers, der von einem flüssigen Wärmeübertragungsmedium durchströmt wird und mit einem Wärmespeicher mit Feststoffüllung in Verbindung steht, über den die Abwärmeenergie kontinuierlich in nachgeschaltete Prozesse mit Wärmebedarf geleitet wird,
dadurch gekennzeichnet,
daß die im Zeitverlauf mit starken Mengenschwankungen, insbesondere intervallartig anfallende Abwärmeenergie in dem/den Primärwärmeaustauschern mit Hilfe des Wärmeübertragungsmediums, dessen Siedetemperatur über 250°C liegt, aufgenommen, in einem Primärkreislauf zu dem Wärmespeicher transportiert und in dem Wärmespeicher, dessen Feststoffüllung eine Korngröße von 3 - I2 cm und keine Feinanteile aufweist, auf einer Temperatur von über 2OO°C zwischengespeichert wird, wobei der Wärmespeicher - abgesehen von dem für die Aufrechterhaltung des Primärkreislaufs erforderlichen Betriebsdruck - ohne Überdruck betrieben und das Wärmeübertragungsmedium unterhalb der Siedetemperatur gehalten wird und daß das Be-und Entladen des Wärmespeichers unabhängig voneinander erfolgen.

2. Verfahren nach Anspruch I, dadurch gekennzeichnet, daß der Wärmespeicher im Temperaturbereich 250 - 400°C, insbesondere im Bereich 280 - 320°C betrieben wird.

3. Vorrichtung zur Durchführung des Verfahrens nach Anspruch I mit mindestens einem von einem flüssigen Wärmeübertragungsmedium durchströmbaren Primärwärmeaustauscher zur Aufnahme der Abwärmeenergie, der mit einem Wärmespeicher mit Feststoffüllung und mit mindestens einer Vorrichtung zur Nutzung der Abwärmeenergie verbunden ist, dadurch gekennzeichnet, daß der Wärmespeicher (2), dessen Füllung (3) eine Korngröße von 3 - I2 cm und keine Feinanteile aufweist, in einem Primärkreislauf (9, II) mit dem/den Primärwärmeaustauschern (I) und über ein unabhängig vom Primärkreislauf (9, II) betreibbares Leitungssystem (5, 5a, 5b, 6, 6a, 6b) zum kontinuierlichen Abziehen der gespeicherten Wärmeenergie verbunden ist und daß das Wärmeübertragungsmedium eine Siedetemperatur von über 250°C aufweist.

4. Vorrichtung nach Anspruch 3, dadurch gekennzeichnet, daß der Wärmespeicher (2) ein Inertgasdruckpolster aufweist.

5. Vorrichtung nach einem der Ansprüche 3 oder 4, dadurch gekennzeichnet, daß die Korngröße der Feststoffüllung 5 - 7 cm beträgt.

6. Vorrichtung nach einem der Ansprüche 3 bis 5, dadurch gekennzeichnet, daß als Feststoffüllung (3) Naturstein, insbesondere Dolomit, eingesetzt ist.

7. Vorrichtung nach einem der Ansprüche 3 bis 5, dadurch gekennzeichnet, daß als Speicherfüllung (3) Baryt, Granit, Grauwacke oder Pophyr eingesetzt ist.

8. Vorrichtung nach einem oder mehreren der Ansprüche 3 bis 7, dadurch gekennzeichnet, daß als Feststoffüllung (3) eine Mischung verschiedener Gesteinsarten eingesetzt ist.

9. Vorrichtung nach einem der Ansprüche 3 bis 8, dadurch gekennzeichnet, daß das Wärmeübertragungsmedium spezielles Wärmeübertragungsöl mit einer thermischen Beständigkeit von mindestens 300°C bis zu 400°C ist.

IO. Vorrichtung nach einem der Ansprüche 3 bis 9, dadurch gekennzeichnet, daß das Leitungssystem (5, 5a, 5b, 6, 6a, 6b) zum Abziehen der gespeicherten Wärme als Sekundärkreislauf mit mindestens einem Sekundärwärmeaustauscher (7, 26) ausgebildet ist, wobei der Sekundärkreislauf und der Primärkreislauf im Wärmespeicher (2) zueinander offen sind.

II. Vorrichtung nach einem der Ansprüche 3 bis IO, dadurch gekennzeichnet, daß der Wärmespeicher (2) in mehrere Einheiten aufgeteilt ist, die in Serie (hintereinander) geschaltet sind.

I2. Vorrichtung nach einem der Ansprüche 3 bis II, dadurch gekennzeichnet, daß der Wärmespeicher (2) in mehrere Einheiten aufgeteilt ist, die in Reihe (parallel) geschaltet sind.

I3. Vorrichtung nach einem der Ansprüche 3 bis I2, dadurch gekennzeichnet, daß der Wärmespeicher (2) mit einem Dampferzeuger (7) verbunden ist, der an einen Turbinen-Generator-Satz (I3, I4) zur Erzeugung elektrischen Stromes angeschlossen ist.

I4. Vorrichtung nach Anspruch I3, dadurch gekennzeichnet, daß der Kondensator (22) für den aus der Turbine (I3) abgezogenen Dampf als Wärmeaustauscher für die Erwärmung des Heizungswasser eines Gebäudeheizsystems (24, 25) ausgebildet ist.